# EUROPEAN PATENT APPLICATION

(11) **EP 2 305 858 A1**
(43) Date of publication of application: **06.04.2011**
(21) Application number: 09766591.3
(22) Date of filing: 12.06.2009
(51) Int. Cl.: C25B 1/26

(54) **METHOD FOR PRODUCING CHLORINE DIOXIDE WITH SINGLE-LIQUID ELECTROLYSIS**

(30) Priority: 19.06.2008 JP 2008160276
(71) Applicant: Taiko Pharmaceutical Co., Ltd., Suita-shi Osaka 564-0032 (JP)
(72) Inventor: ASADA, Shigeo, Suita-shi Osaka 564-0032 (JP); NAKAHARA, Koichi, Suita-shi Osaka 564-0032 (JP)
(74) Representative: Niizuma, Yo
(86) International application number: PCT/JP2009/060751
(87) International publication number: WO 2009/154143

(57) **Abstract**

Provided is a method for producing chlorine dioxide with single-liquid electrolysis, wherein a direct current is supplied to an electrolyte in an electrolysis tank having an anode and a cathode and no separating membrane, electrolysis is carried out and chlorine dioxide is produced as a result. In this method, (a) the direct current is supplied to the electrolyte which contains alkali chloride, alkali chlorite and pH regulating agent in a state where the pH of said electrolyte is from 4 to 8 and electrolysis is carried out, (b) replenishing electrolyte containing alkali chloride, alkali chlorite and pH regulating agent is supplied from the outside to the electrolysis tank during the electrolysis, and (c) the chlorine dioxide produced is collected from the electrolyte.

## Description

### TECHNICAL FIELD

The present invention relates to a method for producing chlorine dioxide with single-liquid electrolysis (also referred to hereinafter simply as "method for producing chlorine dioxide") and specifically relates to a method for producing chlorine dioxide that enables chlorine dioxide to be produced efficiently while preventing lowering of electrolysis efficiency.

### BACKGROUND ART

A method for producing chlorine dioxide by electrolyzing an electrolyte that contains a chlorite has been conventionally known (reference: Patent Document 1).

### PRIOR ART DOCUMENT

### PATENT DOCUMENT

Patent Document 1: Japanese Published Unexamined Patent Application No. H9-279376

### SUMMARY OF THE INVENTION

### PROBLEMS TO BE SOLVED BY THE INVENTION

However, with the conventional method for producing chlorine dioxide, when electrolysis is performed by passing through a current of a practical level, the pH increases gradually and electrolysis efficiency (chlorine dioxide generation efficiency) decreases. If an acid is added to lower the pH, storage stability of the electrolyte is lost and the electrolyte degrades with time. Thus, with the conventional method for producing chlorine dioxide by electrolysis, it was difficult to strike a balance between "storage stability of the electrolyte" and "chlorine dioxide generation efficiency."

### MEANS FOR SOLVING THE PROBLEMS

The present invention has been made in view of the above circumstances, and the present invention was arrived at by finding that a satisfactory balance of "storage stability of the electrolyte" and "chlorine dioxide generation efficiency", which were difficult to balance, can be achieved and an excellent electrolyte can be provided by making a pH of the electrolyte be 4 to 8.

### [PURPOSE OF THE INVENTION]

The purpose of the present invention is to provide a method for producing chlorine dioxide that uses an electrolyte of excellent storage stability and is a method for producing chlorine dioxide that is also excellent in chlorine dioxide generation efficiency.

The first characteristic arrangement of a method for producing chlorine dioxide according to the present invention for achieving the above purpose is a method for producing chlorine dioxide in which chlorine dioxide is generated by performing electrolysis by supplying a direct current to an electrolyte in a separating-membraneless electrolytic cell having a cathode and an anode, and is a method for producing chlorine dioxide with single-liquid electrolysis characterized in including the following steps.
(a) A step of generating chlorine dioxide by performing electrolysis by supplying the direct current to the electrolyte, which contains an alkali chloride, an alkali chlorite and a pH adjusting agent, in a state where a pH of the electrolyte is always 4 to 8.
(b) A step of supplying a replenishing electrolyte, containing the alkali chloride, the alkali chlorite, and the pH adjusting agent, to the electrolytic cell during the electrolysis.
(c) A step of taking out the generated chlorine dioxide from the electrolyte.

By this arrangement, the degradation of the electrolyte is minimized because the pH of the electrolyte is in the range of 4 to 8, and the storage stability is thus excellent and an excellent effect is also exhibited regarding the electrolysis efficiency of chlorine dioxide. Also, by supplying the direct current to the electrolyte to perform electrolysis, chlorine gas, which is generated from the alkali chloride, reacts immediately with the alkali chlorite to become chlorine dioxide. Although an alkali hydroxide is produced as a side reaction at the same time, the alkali hydroxide is neutralized in the electrolyte and moreover by the action of the pH adjusting agent, the pH of the electrolyte is made less likely to greatly vary.
Here, the pH adjusting agent preferably contains chlorine because the alkali hydroxide then returns to the alkali chloride after neutralization. The chlorine dioxide generated (produced) is in a dissolved state in the electrolyte and can thus be collected from the solution by degassing, etc., by a conventionally known method.

The second characteristic arrangement of the method for producing chlorine dioxide according to the present invention is that the electrolysis is performed in a state where the pH of the electrolyte is 5 to 7.

By this arrangement, an even better electrolyte can be provided by the balance of the storage stability of the electrolyte and the chlorine dioxide generation efficiency.

The third characteristic arrangement of the method for producing chlorine dioxide according to the present invention is that, in the step (c), air or an inert gas is fed into the electrolyte and the air or the inert gas is collected.

By this arrangement, by aerating by feeding the air or the inert gas into the electrolyte and then collecting the air or the inert gas, the chlorine dioxide dissolved in the electrolyte can be collected readily and thus economically.

The fourth characteristic arrangement of the method for producing chlorine dioxide according to the present invention is that in a case where the pH is made 4 to 8 by blending an acidic substance into the electrolyte, the acidic substance is packaged separately and the blending of the acidic substance into the electrolyte is performed at the start of or immediately before the electrolysis.

By the present arrangement, the blending of the acidic substance is performed at the start of or immediately before the electrolysis and degradation of the electrolyte during distribution or storage can thus be prevented because the electrolyte is not put into distribution or storage in a state of being adjusted to the pH of 4 to 8 (or the pH of 5 to 7 or the pH of 6 to 7).

### BRIEF DESCRIPTION OF THE DRAWING

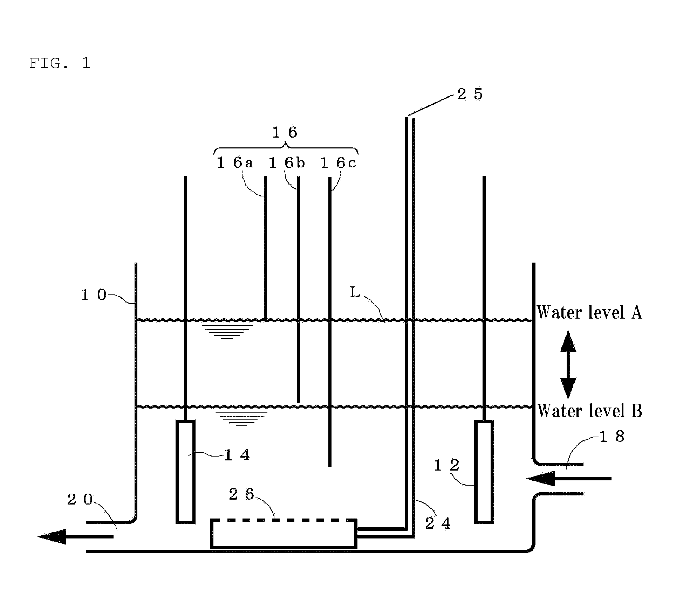

FIG. 1 is a simplified explanatory diagram of a production apparatus according to a method for producing chlorine dioxide according to the present invention.

### MODES FOR CARRYING OUT THE INVENTION

A method for producing chlorine dioxide with single-liquid electrolysis according to the present invention is a method for producing chlorine dioxide in which chlorine dioxide is generated by performing electrolysis by supplying a direct current to an electrolyte in a separating-membraneless electrolytic cell having a cathode and an anode, and includes the following steps.
(a) A step of generating chlorine dioxide by performing electrolysis by supplying the direct current to the electrolyte, which contains an alkali chloride, an alkali chlorite and a pH adjusting agent, in a state where a pH of the electrolyte is always 4 to 8.
(b) A step of supplying a replenishing electrolyte, containing the alkali chloride, the alkali chlorite, and the pH adjusting agent, to the electrolytic cell during the electrolysis.
(c) A step of taking out the generated chlorine dioxide from the electrolyte.

The "separating-membraneless electrolytic cell" refers to an electrolytic cell in a state where a separating membrane is not disposed inside the electrolytic cell that contains the electrolyte.

### [Electrodes]

Conventionally known electrodes may be used as the electrodes used for electrolysis, and electrodes that enable oxygen gas generation to be minimized, chlorine gas to be generated satisfactorily, and chlorine dioxide to be generated efficiently are preferably used. As examples of a cathode material, titanium, stainless steel, nickel, nickel-chromium alloy, or other valve metals can be cited. In regard to an anode material, an electrode made of a noble metal, such as platinum, gold, palladium, iridium, rhodium, or ruthenium, etc., a platinum-coated material having platinum electroplated on graphite, graphite felt, multilayer graphite fabric, woven graphite fabric, carbon, or titanium, or an oxide of a valve metal, such as titanium, tantalum, niobium, or zirconium, can be cited, and an electrode coated with an electrode catalyst is favorably used.
It is preferable to make an electrode area large and a current density low in that chloride dioxide can then be generated efficiently. Specifically, the current density is preferably no more than 1A/dm², more preferably no more than 0.8A/dm², and even more preferably no more than 0.6A/dm².

In the step (a), chlorine dioxide is generated by performing electrolysis by supplying the direct current to the electrolyte containing the alkali chloride, the alkali chlorite, and the pH adjusting agent in the state where the pH of the electrolyte is always 4 to 8.

### [Alkali chloride]

As examples of the alkali chloride used in the present invention, potassium chloride, sodium chloride, lithium chloride, calcium chloride, etc., can be cited. One type of such alkali chloride may be used solitarily or a plurality of types may be used in combination.
A proportion of the alkali chloride in the electrolyte is preferably no less than 1 weight% and more preferably no less than 2 weight% (and less than the solubility). At less than 1 weight%, chlorine gas cannot be generated with stability and there is a possibility of hindering the generation of chlorine dioxide. Although from the point of generating chlorine dioxide efficiently, it is preferable to make the alkali chloride concentration in the electrolyte high, obviously if the solubility is exceeded, the alkali chloride precipitates in the electrolyte and has an adverse effect. Although the proportion of the alkali chloride in the electrolyte thus differs according to the type of alkali chloride and a temperature of the electrolyte and cannot be specified unconditionally, it is preferably set to no more than approximately 20 weight%.
The alkali chloride is consumed during the electrolysis and must be supplied to the electrolyte from outside the electrolytic cell (step (b)).

### [Alkali chlorite]

As examples of the alkali chlorite used in the present invention, alkali metal chlorites and alkaline earth metal chlorites can be cited. As examples of alkali metal chlorites, sodium chlorite, potassium chlorite, and lithium chlorite can be cited, and as examples of alkaline earth metal chlorites, calcium chlorite, magnesium chlorite, and barium chlorite can be cited. Among the above, sodium chlorite and potassium chlorite are preferable and sodium chlorite is most preferable from the point of ease of acquisition. One type of such alkali chlorite may be used solitarily or two or more types may be used in combination.
A proportion of the alkali chlorite in the electrolyte is preferably 0.1 weight% to 30 weight%. At less than 0.1 weight%, there is a possibility that the amount of alkali chlorite necessary for electrolysis is not supplied, and at over 30 weight%, there is a possibility of crystals precipitating readily due to saturation of the alkali chlorite. In view of safety, stability, chlorine dioxide generation efficiency, etc., a more preferable range is 1 weight% to 10 weight% and an even more preferable range is 1 weight% to 3 weight%.
The alkali chlorite is consumed during the electrolysis and must be supplied to the electrolyte from outside the electrolytic cell (step (b)).

### [pH adjusting agent]

As examples of the pH adjusting agent used in the present invention, citric acid, fumaric acid, formic acid, lactic acid, phosphoric acid, an alkali salt (sodium salt, potassium salt, etc.) of dihydrogen phosphoric acid, tartaric acid, butyric acid, etc., can be cited. One type of such pH adjusting agent may be used solitarily or two or more types may be used in combination.
A proportion of the pH adjusting agent in the electrolyte depends on a type and solubility of an acid (acidic substance, to be described below) used or on a solubility of a compound formed by the electrolysis and cannot be specified unconditionally. In other words, it is preferable to determine, from chemical formulae, how the acid (acidic substance, to be described below) used neutralizes the alkali hydroxide formed by the electrolysis, determine the necessary amount from the determined chemical formulae, and use the amount of acid corresponding to the necessary amount. However, depending on the acid used, there may be a compound that is extremely low in solubility or a compound formed by electrolysis that is extremely low in solubility and the acid must thus be selected in consideration of this point. For example, to describe specifically in cases of potassium dihydrogen phosphate and citric acid, in the case where potassium dihydrogen phosphate is the acid, the proportions are 2.0 to 2.3 weight% potassium dihydrogen phosphate + 1.0 to 1.2 weight% dipotassium hydrogen phosphate, and in the case where citric acid is the acid, the proportions are 2.0 to 2.2 weight% citric acid + 6.5 to 7.0 weight% dipotassium hydrogen phosphate.
As with the alkali chlorite, the pH adjusting agent is consumed during the electrolysis and is thus preferably supplied to the electrolyte from outside the electrolytic cell as a component of the replenishing electrolyte (step (b)).

### [Acidic substance]

In view of the balance of the storage stability of the electrolyte and the chlorine dioxide generation efficiency, an acidic substance is favorably blended so that the pH (average pH during electrolysis) is 4 to 8, preferably 5 to 7, and more preferably 6 to 7. A blending proportion of the acidic substance is not restricted in particular as long as the acidic substance is blended to achieve the above pH range.
As examples of the acidic substance used in the present invention, inorganic acids, such as hydrochloric acid, sulfuric acid, sulfurous acid, thiosulfuric acid, nitric acid, nitrous acid, iodic acid, phosphoric acid, alkali salt (sodium salt, potassium salt, etc.) of dihydrogen phosphoric acid, phosphorous acid, sodium hydrogen sulfate, potassium hydrogen sulfate, chromic acid, etc., and organic acids, such as formic acid, acetic acid, propionic acid, butyric acid, lactic acid, pyruvic acid, citric acid, malic acid, tartaric acid, gluconic acid, glycolic acid, fumaric acid, malonic acid, maleic acid, oxalic acid, succinic acid, acrylic acid, crotonic acid, oxalic acid, glutaric acid, etc., can be cited. From the point of stability of the electrolyte, an inorganic acid is preferably used. One type of such acidic substance may be used solitarily or two or more types may be used in combination.
In preparing the electrolyte, the blending of the acidic substance should be performed at the start of or immediately before the electrolysis for the purpose of preventing degradation of the electrolyte. It is thus favorable to prepare the acidic substance in a separately packaged state (in a state of not dissolving in the electrolyte).

### [Aeration gas (air or inert gas)]

In the step (c), the generated chlorine dioxide is taken out from inside the electrolyte.
In the present invention, air or an inert gas is used as a gas for degassing/collection by aeration of the generated chlorine dioxide gas (gas dissolved in the electrolyte). As examples of the inert gas, nitrogen gas, argon, helium, neon, xenon, krypton, etc., can be cited.
By feeding the air or the inert gas into the electrolyte and then collecting the air or the inert gas, the chlorine dioxide dissolved in the electrolyte can be collected readily.

### [Example 1 (Experiment of chlorine dioxide generation efficiency)]

FIG. 1 is a simplified explanatory diagram of a chlorine dioxide production apparatus. As shown in the figure, a Pt/Ir-plated titanium electrode (15mmx50mm), which is an anode (12), a titanium electrode (15mmx50mm), which is a cathode (14), and one set of three liquid level control electrodes (16) are disposed in a cylindrical electrolytic cell (10) made of PVC and containing an electrolyte (L).
A supply port (18) for supplying the replenishing electrolyte into the electrolytic cell (10) and a discharge port (20) for discharging waste liquid from the electrolytic cell (10) are also respectively provided in the chlorine dioxide production apparatus, and for aeration of the generated chlorine dioxide gas (dissolved gas), an aeration tube (24) and an exit (26) are provided for feeding the aeration gas (air or inert gas) into the electrolyte (L).

In the electrolyte (L), potassium chloride (alkali chloride), sodium chlorite (alkali chlorite), dipotassium hydrogen phosphate (K₂HPO₄) (pH adjusting agent), and potassium dihydrogen phosphate (KH₂PO₄) (acidic substance) are blended as shown in Table 1 below (Example 1 and Comparative Examples 1 to 4). The acidic substance is not added in Comparative Examples 1 and 3, the pH adjusting agent is not added in Comparative Examples 1 to 3, and the alkali chloride is not added in Comparative Examples 1, 2, and 4.

Chlorine dioxide production experiments were performed using the apparatus described above. During electrolysis, the supplying of the electrolyte is performed continuously or intermittently, and the discharge of waste liquid is performed as follows. That is, when in a state where the liquid level control electrode (16c) is immersed in the electrolyte (L), a liquid level is at the position of a water level A, the liquid level control electrode (16a) is in a conducting state and the discharge port (20) opens and the electrolyte (waste liquid) is discharged. When the liquid level decreases and reaches the position of water level B, the liquid level control electrode (16b) becomes electrically non-conducting and the discharge port (20) closes at the same time. The liquid level is thereby raised and when it reaches the water level A, the liquid level control electrode (16a) is put in the conducting state and the discharge of the waste liquid is restarted. Such supplying and discharging of the electrolyte are performed during electrolysis.

Electrolysis was performed using such an apparatus (current: 30mA, 0.4A/dm²).
To take out (degas/collect) the chlorine dioxide, a conventionally known method was used to aerate the electrolyte with air or an inert gas (nitrogen gas, argon, helium, neon, xenon, krypton, etc.) through the aeration tube. Chlorine dioxide production results (concentration, amount generated per time, efficiency, etc.) are shown together in Table 1 below.

**[Table 1]**

| | Example 1 | Comparative Example 1 | Comparative Example 2 | Comparative Example 3 | Comparative Example 4 | |
|---|---|---|---|---|---|---|
| 25% Na chlorite (ml) | 100 | 100 | 100 | 100 | 100 | |
| KH₂PO₄ (g) | 20 | - | 2 | - | 20 | |
| K₂HPO₄ (g) | 10 | - | - | - | 10 | |
| KCl (g) | 10 | - | - | 10 | - | |
| H₂O (ml) | 900 | 900 | 900 | 900 | 900 | |
| Electrolyte pH (initial) | 6.1 | 10.5 | 6.12 | 10.9 | 6.1 | |
| Electrolyte pH (average) | 7.0 | 10.8 | 10.1 | 11.0 | 9.0 | |
| ClO2 generated (ppm) | 554.3 | 189.5 | 184.3 | 196.4 | 377.5 | Theoretical value 898.9 |
| Amount generated | 46.6 | 15.9 | 15.5 | 16.5 | 31.7 | 75.5 |
| Efficiency (%) | 61.7 | 21.1 | 20.5 | 21.8 | 42 | 100 |
| Chlorine gas | Undetected | | | | | Undetected |

As a result, it was found that with Example 1 according to the present invention, chlorine dioxide can be obtained with good efficiency in comparison to Comparative Examples 1 to 4. Also, the pH of the electrolyte did not vary greatly, as can be seen from a comparison of the initial value at the start of electrolysis (pH 6.1) and the average value during the electrolysis process period (pH 7.0), and the method for producing chlorine dioxide according to the present invention can thus be said to be a method with which the stability of the electrolyte is excellent.

### [Examples 2 and 3 (Experiment of storage stability of electrolyte)]

To examine the storage stabilities of electrolytes of the formulations shown in Table 2 below, an accelerated test process at 50°C was applied to the electrolytes (Examples 2 and 3 and Comparative Example 5). Processing for 50 days at 50°C is considered to be equivalent to storing at room temperature for approximately 2 years. With the electrolytes stored for the respective periods, a change of pH, a concentration of spontaneously generated chlorine dioxide, and a residual concentration of sodium chlorite were measured by conventionally known methods. The results are shown in Table 3 below. It is judged that the storage stability of the electrolyte is excellent if the concentration of spontaneously generated chlorine dioxide is within 500ppm.
In Example 3, although the pH is adjusted to 6.0 by addition of the acidic substance (20g of potassium dihydrogen phosphate (KH₂PO₄)) before the start of electrolysis, the acidic substance is packaged separately and put in a non-added state during storage of the electrolyte (when electrolysis is not performed).

**[Table 2]**

| | Example 2 | Example 3 | Comparative Example 5 |
|---|---|---|---|
| 25% Na chlorite (ml) | 100 | 100 | 100 |
| KH₂PO₄ (g) | 20 | Packaged separately | - |
| Citric acid (g) | - | - | 18.8 |
| K₂HPO₄ (g) | 10 | 10 | 10 |
| KCl (g) | 10 | 10 | 10 |
| H₂O (ml) | 900 | 900 | 900 |
| pH immediately after preparation | 6.0 | 9.7 | 3.17 |

**[Table 3]**

| Storage stability of electrolyte of Example 2 | | | | |
|---|---|---|---|---|
| | Immediately after preparation | Storage at 50°C | | |
| | | 7 days later | 10 days later | 20 days later |
| pH | 6.0 | 6.03 | 6.05 | 6.01 |
| generated (ppm) | 7.45 | 269.8 | 242.8 | 269.8 |
| ClO₂ - (ppm) | 21399 | 17861 | 1 6378 | 11205 52.4% remaining |
| | | | | |

| Storage stability of electrolyte of Example 3 | | | | |
|---|---|---|---|---|
| | Immediately after preparation | Storage at 50°C | | |
| | | 7 days later | 10 days later | 20 days later |
| p H | 9.7 | 9.64 | 9.63 | 9.58 |
| ClO₂ generated (ppm) | ○ | ○ | ○ | ○ |
| ClO₂ - (ppm) | 22275 | 21989 | 22158 | 22242 |
| | | | | |

| Storage stability of electrolyte of Comparative Example 5 | | | | |
|---|---|---|---|---|
| | Immediately after preparation | Storage at 50°C | | |
| | | 7 days later | 10 days later | 20 days later |
| pH | 3.17 | 3.27 | 3.13 | |
| ClO₂ generated (ppm) | 1551 | 1005 | 1464 | |
| ClO₂ - (ppm) | 17777 | ○ | ○ | |

As a result, it was found that with Examples 2 and 3 according to the present invention, the pH value hardly changes and the concentration of spontaneously generated chlorine dioxide is within 500ppm for up to 20 days after preparation of the electrolyte and the electrolyte used in the method for producing chlorine dioxide according to the present invention thus exhibits excellent storage stability.

### INDUSTRIAL APPLICABILITY

The present invention can be used to produce chlorine dioxide.

## Claims

1. A method for producing chlorine dioxide with single-liquid electrolysis, wherein chlorine dioxide is generated by performing electrolysis by supplying a direct current to an electrolyte in a separating-membraneless electrolytic cell having a cathode and an anode, the method for producing chlorine dioxide comprising:
(a) a step of generating chlorine dioxide by performing electrolysis by supplying the direct current to the electrolyte, which contains an alkali chloride, an alkali chlorite and a pH adjusting agent, in a state where a pH of the electrolyte is always 4 to 8;
(b) a step of supplying a replenishing electrolyte, containing the alkali chloride, the alkali chlorite, and the pH adjusting agent, to the electrolytic cell during the electrolysis; and
(c) a step of taking out the generated chlorine dioxide from the electrolyte.

2. The method for producing chlorine dioxide according to Claim 1, wherein the electrolysis is performed in a state where the pH of the electrolyte is 5 to 7.

3. The method for producing chlorine dioxide according to Claim 1 or 2, wherein in the step (c), air or an inert gas is fed into the electrolyte and the air or the inert gas is collected.

4. The method for producing chlorine dioxide according to Claim 1, wherein in a case where the pH is made 4 to 8 by blending an acidic substance into the electrolyte, the acidic substance is packaged separately and the blending of the acidic substance into the electrolyte is performed at the start of or immediately before the electrolysis.
